(19) Europäisches Patentamt
European Patent Office
Office européen des brevets

(11) **EP 1 188 108 B1**

(12) **EUROPEAN PATENT SPECIFICATION**

(45) Date of publication and mention
of the grant of the patent:
**26.11.2003 Bulletin 2003/48**

(51) Int Cl.$^7$: **G06F 5/06**

(86) International application number:
**PCT/IT00/00153**

(21) Application number: **00925576.1**

(22) Date of filing: **17.04.2000**

(87) International publication number:
**WO 01/079987 (25.10.2001 Gazette 2001/43)**

(54) **TWO CLOCK DOMAIN PULSE TO PULSE SYNCHRONIZER**

SCHALTUNG ZUR SYNCHRONISATION VON IMPULSEN, DIE IM JEWEILS ANDEREN
GELTUNGSBEREICH ZWEIER VERSCHIEDENER TAKTSIGNALE ERZEUGT WERDEN

SYNCHRONISEUR D'IMPULSION A IMPULSION A DEUX DOMAINES D'HORLOGE

(84) Designated Contracting States:
**DE FR GB IT NL SE**

(43) Date of publication of application:
**20.03.2002 Bulletin 2002/12**

(73) Proprietor: **Italtel S.p.a.**
**20154 Milano (IT)**

(72) Inventors:
• **GEMELLI, Riccardo**
**I-20078 San Colombano al Lambro (IT)**
• **PAVESI, Marco**
**I-27029 Vigevano (IT)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 798 630**    **EP-A- 0 977 109**
**US-A- 4 546 469**    **US-A- 4 811 282**
**US-A- 4 873 703**    **US-A- 5 987 081**
**US-A- 6 055 285**

EP 1 188 108 B1

**Description**

FIELD OF THE INVENTION

The present invention relates to microprocessor interface synchronization circuits and in particular to a two-clock domain pulse to pulse synchronizer. The disclosed invention is particularly suited to be applied in the modular design area (macro-cell based designs).

BACKGROUND OF THE INVENTION

Operations in digital systems can be carried out concurrently or must obey a precedence relationship. If two operations obey a precedence relationship, then the role of synchronization is to ensure that operations are carried out in the correct order. So, in the context of digital systems, synchronization implies a set of techniques used to ensure that operations are performed in the correct order.

Before introducing synchronization techniques some definitions taken from literature are given. If two isochronous signals (signals characterized by uniformly time spaced transition opportunities, that is, transition opportunity times occur at a constant frequency) have the same frequency and the instantaneous phase difference between them is null, they are said to be synchronous. Even if only one of the two previous conditions is not satisfied, the two signals are said to be asynchronous. When all signals belonging to a system are synchronous, the system itself is said synchronous.

In synchronous systems a synchronization technique named Synchronous Interconnect is used. A common isochronous periodic signal named clock beat the time. More precisely, the positive clock edge beats transition opportunity times for all sequential devices (flip-flops) of the system. All signals are slaved to this clock, that is, their values are considered meaningful only at positive edges of the clock, for this reason all the memory devices used in the system arc edge triggered (i.e. edge triggered flip-flops storing incoming signals on the positive clock edge).

Supposing that two circuits have to exchange data, the direction of data flow is from the originating circuit or originating element to the receiving circuit or receiving element. The synchronous interconnection technique consists in connecting the signal carrying information, namely data from the originating circuit to the receiving circuit and providing the same clock to the two elements (no other subsidiary signals being required). The fundamental hypothesis is that the two circuits are clocked with the same clock, that is all the signals of the two elements, and thus data, are isochronous. By the reasons explained above the edge triggered sequential device receiving the signal data will correctly sample it.

This "straightforward" method of interconnection can only be used in synchronous systems. Connecting edge triggered memory elements belonging to two different asynchronous clock domains (two domains whose clocks are asynchronous) by using the synchronous interconnection technique is not possible. In this case two problems arise: a first problem is related to metastability and a second one is related to the impossibility of determining a correct strobing point for the signal data from the receiving element; this problem is related to the protocol of communication (also named synchronization protocol) between the two elements. The first problem occurs when the variation of signal data fall into the setup/hold windows of the edge triggered memory device located in the receiving element; this, as proved in literature, can cause the memory device to go into a metastable state. In this state outputs of the memory device assume indeterminate values, that is electrical levels not meaningful for digital electronics.

As an example, for TTL (Transistor Transistor Logic) the digital value "one" is represented by a value falling into the interval $1.5 \div 5$ Volts while the digital value "zero" is represented by a value falling into the interval $0 \div 0.5$ Volts. Any value not belonging to said two intervals is considered indeterminate. A TTL gate, supplied with such a value, will not operate correctly. This example shows how important metastability is.

A known method to avoid metastability is the so-called "multiple sampling". Let us consider an originating circuit that must transfer data to a receiving circuit, belonging the two circuits to two different asynchronous clock domains. The theory of metastability states that including a cascade of N flip-flops circuit for sampling the incoming data in the receiving element, the probability that the output of the Nth flip-flop assumes an undefined logic value decreases in an exponential fashion with N. In all cases of practical interest, using a cascade of two flip-flops the probability of having an undefined logic value on the output of the 2nd flip-flop is negligible.

It is important to point out that the fact of avoiding metastability does not ensure that the communication between the originating circuit and the receiving circuit is reliable. If for instance the originating circuit transmits 0 followed by 1 and the first flip-flop of the receiving circuit samples this signal while it is switching from 0 to 1 (the variation happens into the setup/hold windows of the flip-flop), it can go into a metastable state. Let us suppose that this first flip-flop really goes into a metastable state. The second flip-flop sampling the output of the first flip-flop do not go into a metastable state, but resolves the undeterminated logic value at its input and switches to 0. This can happen because the theory of metastability ensures that metastability is resolved with a cascade of flip-flops. Such a theory does not ensures that the output of the last flip-flop of the cascade correctly reproduces the input sampled by the first flip-flop.

This last question it is about how to ensure a reliable communication between elements in the hypothesis that metastability is resolved with proper techniques. In general, even if metastability did not exist, the synchronous interconnection would not be reliable in case of asynchronous clock domains connected together. This is shown in the following example.

Let us suppose that the two clock domains of the originating circuit and of the receiving circuit are asynchronous, and in particular that their periods are different. If for example the period of the clock of the receiving circuit is M times the period of the clock of the originating circuit, the receiving circuit can catch at most one datum out of M. On the contrary, if the period of the clock of the originating circuit is M times the period of the clock of the receiving circuit, the last one catches M times the same datum.

From this example it is evident that synchronous communication depends on delays and more precisely on the duration of a valid datum and the time needed from the receiving circuit to catch it. Moreover, the data flow is not only unreliable but also not regulated. As an example, even if the receiving circuit is not ready to receive a datum, the originating circuit continues transmitting data because it has no means to know this.

It is clear that, if the two elements are clocked with clocks of different frequencies and the clock of the receiving circuit has a frequency lower than the one of the originating circuit, sooner or later the receiving circuit will be filled of data. To avoid loss of data the transmission should not exceed a certain data rate affordable by the receiving circuit.

To grant reliable communication a proper protocol has to be used. The general way of interconnecting two circuits or elements that are asynchronous is the so called "Asynchronous Interconnect" protocol. In this technique both the isochronous assumption and the use of a global clock signal have been abandoned. Interconnections between elements belonging to an asynchronous system are designed to operate in a delay insensitive manner, that is operates reliably regardless of what the delays arc. This is accomplished by having each element of the system able to generate a completion signal. The completion signal is a sort of locally generated clock, and is used to synchronize different elements. Examples are given in the case of "Synchronous Interconnect" protocol modified by adding two completion signals also named handshake signals. The originating circuit generates a request signal that is a signal indicating to the receiving circuit that data are available. The receiving circuit replies generating an acknowledge signal indicating to the originating circuit that the request signal has been received and the originating circuit is free to proceed with the generation of a new request signal coupled to new data.

The correct operation of the Asynchronous Interconnect protocol does not depend on assumptions about delays. This happens because the round-trip feedback ensures that the two operations are synchronized.

Summarizing the above, it may be said that synchronization is provided through the following operations:

1. Recovery from metastability.
2. Two phase handshake (other known cases are less general than two phase handshake).

Recovery from metastability is well explained in the paper of Debora Grosse, titled "KEEP METASTABILITY FROM KILLING YOUR DIGITAL DESIGN", published by EDN (Electronic Design), June 23, 1994. Point 2 with all the questions risen in the technical background discussed above, has been explained in large measure in the paper of David G. MESSERSCHMIT, "SYNCHRONIZATION IN DIGITAL SYSTEM DESIGN", published on IEEE JOURNAL ON SELECTED AREAS IN COMMUNICATIONS, vol. 8, No. 8, October 1990.

The disclosure EP-A-0 798 630 illustrates a synchronizing circuit according to the preamble of claim 1.

The present invention is not particularly concerned with recovery from metastability. Indeed, nowadays the double sampling technique of a signal generated with a certain transmission clock by using an asynchronous reception clock is a consolidated practice. The invention relates specifically to the other aspect of synchronization.

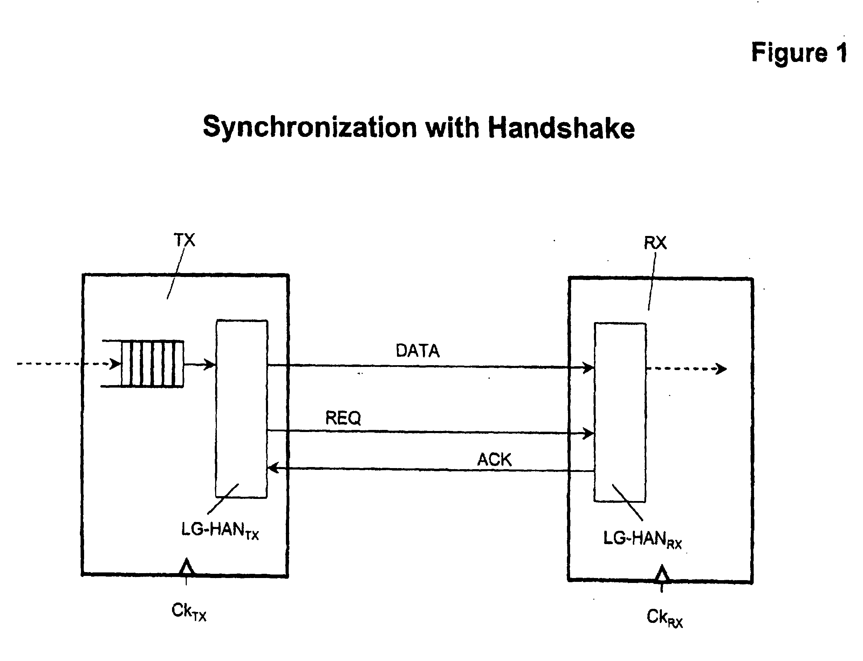

In **Figure 1** a commonly known two-phase handshake system is shown. The system includes a transmission block TX clocked with a clock $Ck_{TX}$ and a receiving block RX clocked with a second clock $Ck_{RX}$, asynchronous to the clock $Ck_{TX}$. Transmission block TX is connected to the reception block RX by means of a first wire for a signal DATA to be transmitted, a second wire for a request signal REQ, and a third wire for an acknowledge signal ACK. The block TX includes a further block LG-HAN$_{TX}$ representing an interface circuit for signal REQ and the block RX includes a further block LG-HAN$_{RX}$ representing an interface circuit for signal ACK. Both interface circuits are required for handshake management. Transmission block TX is either able to generate by itself the transmission signal DATA or to act on behalf of an external agent. In both cases when the transmission signal DATA is a burst or a stream, the block TX generally includes a transmission buffer like a FIFO (First In First Out) memory for accumulating a certain amount of data.

The system of Fig. 1 works properly until the following relation is true:

$$Troughput_{TX} \le Troughput_{RX} \tag{1}$$

after which, even if a transmission buffer is used, a data loss will occur. The throughput condition has been written for highlighting that the handshake is not sufficient per se for transferring data successfully.

A drawback of the known system of **Figure 1** is that it does not promote modularity of the design, because of the presence of the two blocks LG-HAN$_{TX}$ and LG-HAN$_{RX}$ and the two wires for signals REQ and ACK. For example, modification of the design from a not isochronous interface to an isochronous one is not easy, for the reason that both blocks TX and RX must be redesigned for eliminating the two interface circuits LG-HAN$_{TX}$ c LG-HAN$_{RX}$.

A long time felt need in the field of synchronization of modular designs with two asynchronous clock domains is that of having a module able to perform both recovery from metastability and synchronization in an autonomous way. Such a module could be simply interposed between the two blocks TX and RX of respective different clock domains, and simply removed or disabled when the isochronous option is preferred (the TX clock domain coincident with the RX clock domain), without any change in the interface circuits. The availability of such a self standing module would be a great asset for designing modular systems as the so called macro-cells based designs which are becoming so popular nowadays.

A first known attempt in the direction of simplifying the asynchronous protocol consists in embedding a counter in the block TX. Such a block, by counting a certain number of clock periods corresponding to a time interval T$_{sampling}$ in which the transmitting data is held at constant level, permits to the block RX to perform double sampling for recovery from metastability. Although this solution avoids handshake, it does not eliminate completely the circuitry inside the blocks TX and RX. But the major drawback is that, being the time interval T$_{sampling}$ dependent on the ratio between the frequencies of the two clocks, Ck$_{TX}$ and Ck$_{RX}$, a change of one of the two asynchronous clocks needs a setting of a new counting window.

OBJECT AND SUMMARY OF THE INVENTION

It has been found and is the object of the present invention a synchronization circuit allowing the generation of a pulse lasting one period of a clock of an arrival clock domain starting from an incoming pulse, or a step signal, referred to an originating clock that may be different in phase and/or frequency from the arrival clock. The circuit of the invention is free from the drawbacks of the known art when the relation (1) is satisfied, as in the majority of practical cases.

The synchronization circuit of the invention can be functionally placed between two asynchronous starting and arrival clock domains without the need of undertaking handshake procedure or other operations requiring an "ad hoc" logic circuit in the blocks at the two ends of the connection.

The synchronization circuit of the invention operating between two different clock domains is insensitive to changes of the frequency ratio between the two different clocks.

Yet another objective of the invention is that of providing a bidirectional synchronizer for transferring digital words between two different clock domains, suitable for words like commands (pulses) accompanied by a strobe signal or alarms (steps or pulses).

The invention is clearly defined in independent claim 1. Further embodiments of the invention are specified in the appended dependent claim 1.

BRIEF DESCRIPTION OF THE DRAWINGS

All advantages of the present invention will become clearer through the detailed description of several embodiments of the invention and by referring to the attached drawings wherein:

**Figure 1** depicts a handshake system of the prior art;
**Figure 2** shows a synchronization unit of the present invention;
**Figure 3** is a timing representation of important signals of **Figure 2**;
**Figure 4** depicts a bidirectional synchronizer including the synchronized command register DIR-SY and the synchronized alarm register INV-SY of the invention;
**Figure 5** is a detailed description of the block DIR-SY of **Figure 4**;
**Figure 6** is a detailed description of the block IN V-SY of **Figure 4**.

DESCRIPTION OF SEVERAL EMBODIMENTS OF THE INVENTION

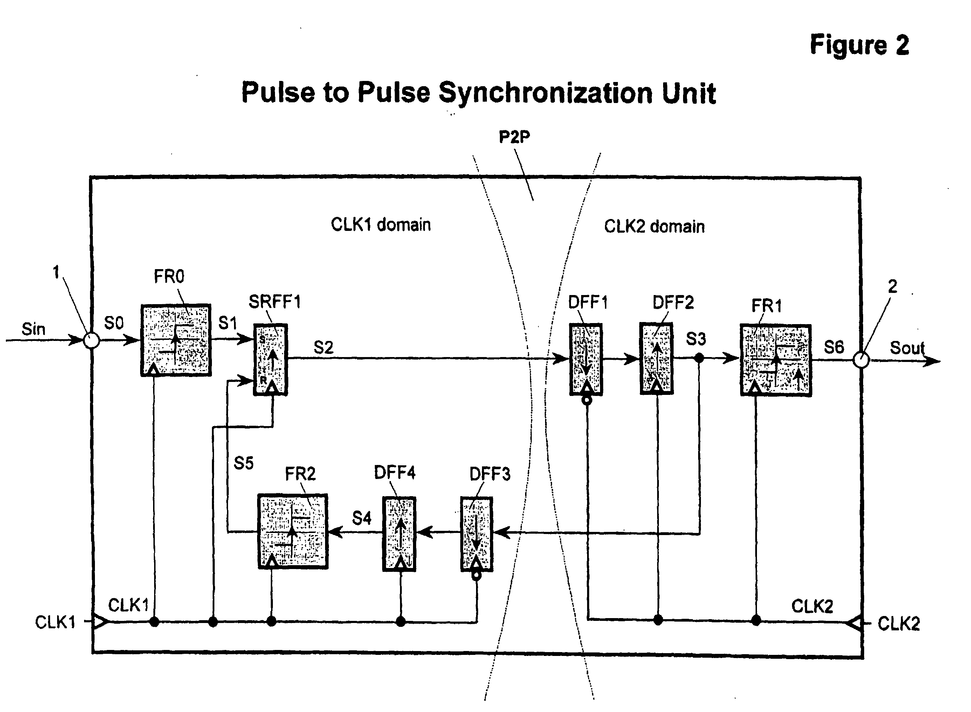

A block P2P, where the acronyms P2P means pulse to pulse, representing a preferred embodiment of a synchronization unit of the invention is depicted in **Figure 2.** At the right side there arc an input pin 1 for an input signal $S_{IN}$ and a clock pin CLK1 for a first clock CLK1 and at the left side there are an output pin 2 for an output signal $S_{OUT}$ and a clock pin CLK2 for a second clock CLK2 that may be asynchronous in frequency and/or phase in respect to the first clock domain.

The circuit is split into two clock domains, namely CLK1 domain and CLK2 domain which extend outside the synchronization unit P2P. Within the block P2P, the CLK2 domain includes a cascade of two type-D flip-flop DFF1 and DFF2, and a rising edge detector FR1. The CLK1 domain within the P2P block includes a rising edge detector FR0, a set-reset flip-flop SRFF1, a cascade of two type-D flip-flop DFF3 and DFF4, and a rising edge detector FR2.

All elements of the CLK1 domain are clocked with the rising edge of the clock CLK1, except flip-flop DFF3, which is clocked with the falling edge. All elements of the CLK2 domain are clocked with the rising edge of the clock CLK2, except flip-flop DFF1, which is clocked with the falling edge.

Even if other solutions are possible, all the devices that compose the P2P block can be conveniently realized with D-type flip-flops and with logic gates because in this way the entire P2P circuit can be realized with any digital component library available on the market.

The arrow direction sketched inside each memory device indicates the sensitivity of the memory device to the rising (up arrow direction) or falling (down arrow direction) clock edge.

Even if is possible to use only one active edge of clock, using both clock edges reduces the time taken by the synchronization process.

In general, component libraries make available only memory devices sensitive to a clock rising edge, and the simplest way to obtain a memory device sensitive to a clock falling edge is to negate the clock by an inverter and to provide this negated clock to a memory device sensitive to the clock rising edge. The use of an inverter does not introduce skew problems (not even in an ASIC device) provided the number of memory devices to be supplied is relatively low, like in the present case.

The fundamental property of the P2P circuit is to transform a pulse or a step signal $S_{IN}$ clocked with the clock CLK1 being input on pin 1 into a pulse $S_{OUT}$ clocked with CLK2 output on pin 2. The synchronization circuit of the present invention transforms a pulse or a step signal $S_{IN}$ synchronous with a first clock CLK1 into a pulse $S_{OUT}$ synchronous with a second clock CLK2 whatever the phase and frequency relationship between the two clocks is. In order to operate correctly, the synchronization block P2P of the invention only needs the presence of the two clocks and of the incoming signal to be converted. No handshake procedure nor a counter in the transmitting block are requested. The necessary handshake for synchronization, as implied by a communication between two asynchronous clock domains, is resolved internally in the block P2P.

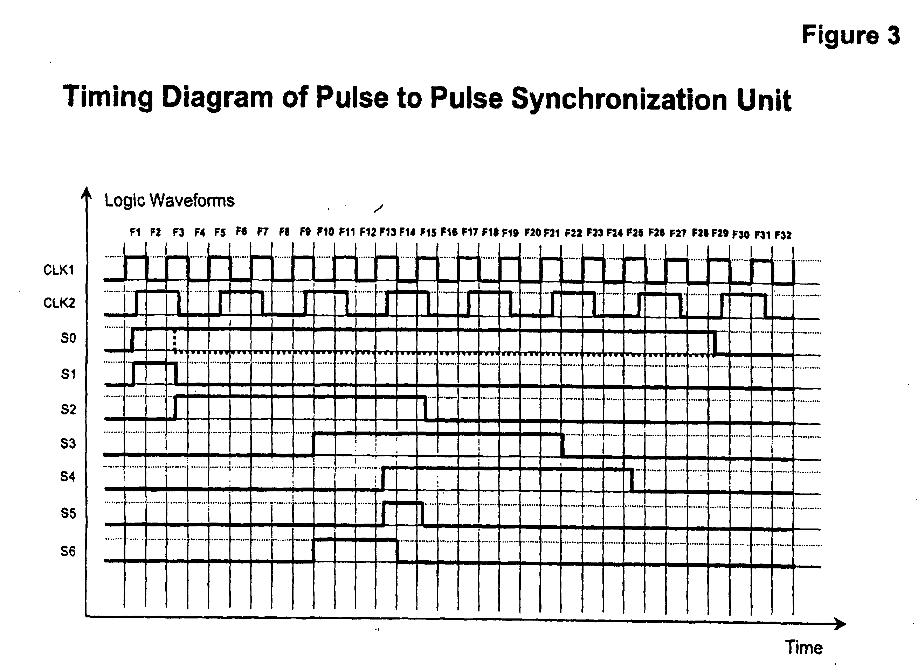

The functioning of the synchronization unit of the invention can be explained by referring the waveforms of the signals CLK1, CLK2, S0, S1, S2, S3, S4, S5 and S6 depicted in Fig.3.

Time is divided into time frames F1 to F32, wherein each time frame represents half period of the fastest clock CLK1. Either a pulse (sketched with dotted line) or a step (sketched with continuous line) signal S0, representing an input signal SIN, can be fed to the input of the rising edge detector FR0. In both cases the output of the rising edge detector FR0 is a pulse S1 that is fed to the set input of the flip-flop SRFF1.

This pulse is asserted in cycles from F1 to F3. Flip-flop SRFF1 samples the asserted pulse signal S1 with the rising edge of CLK1 at the time frame F2. As a consequence, flip-flop SRFF1 switches and during F3 the signal S2 is asserted. The signal S2 is kept asserted and is not possible for any signal belonging to the clock domain CLK1 to negate it.

The signal S2 is then transmitted to the second clock CLK2 domain. In the clock domain of CLK2, a first double sampling (with the clock CLK2) is performed to avoid metastability. In particular, a double sampling with opposite clock phases is performed to avoid metastability without wasting two clock pulses, but as said before a more traditional solution using two flip-flops triggered by the same edge is also satisfactory. The double sampling practically ensures that at the output of DFF2 the signal S3 does not assume illegal values.

The duration of the active phase of the signal S2 is a key-factor to provide for correct communication between the two clock domains. In fact, if the duration of the signal S2 were less than two CLK2 cycles, the generation of the signal S3 from the signal S2 would become unreliable even performing a double sampling. In fact, if the transition zero-to-one of the flip-flop SRFF1 happened in the setup-hold window of the flip-flop DFF1, the output of this flip-flop could assume an illegal value (a value unrecognized by logic devices) with a non negligible probability. By virtue of the double sampling, the output of the second flip-flop DFF2 assumes a legal logic value (either zero or one) in any case.

The theory of metastability does not ensure that the recognized value is the correct one, it only ensures that the recognized value is a legal logic value, such not to cause metastability in logic devices to which is input.

By way of an example, the recognized signal S3 could be zero even if signal S2 switched from zero to one.

Being the signal S2 a pulse, the information carried by it could be lost. To avoid such a possible loss of information, the signal S2 must be kept stable. Stability allows the flip-flop DFF2 to perform more than one single sampling. In this way the flip-flop DFF2 has the opportunity of sampling a stable signal S2, as provided by the flip-flop SRFF1.

The signal S3, which is a step signal asserted in cycle F10, is input to the front detector FR1 that produces a pulse S6, clocked with the clock CLK2 and lasting one clock period. The signal S6 output from the front detector FR1 is made available on the pin 2 of P2P unit as output signal SOUT. At the same time, the signal S3 is fed-back to the CLK1 domain.

The cascade of flip-flops DFF3 and DFF4 is input with the signal S3, for avoiding metastability, and produces a signal S4. The signal S4 is input to the front detector FR2.

The front detector FR2 outputs a pulse S5, clocked with the clock CLK1 and lasting one CLK1 period (that is from F13 to F15). The signal S5, which is coupled to the reset pin of the flip-flop SRFF1, resets it, making the signal S2 assume a logic zero value at the time frame F15, and so do signals S3 and S4 at time frames F22 and F25, respectively.

The loop composed of devices SRFF1, DFF1, DFF2, DFF3, DFF4 and FR2 ensures that the signal S2 is negated after its effect has been felt by the device FR1, providing for reliable communication between signals S1 and S6.

The synchronization circuit of the invention described above can be simply interposed between any two different clock domains without the need of embedding dedicated logic interfaces in the originating block and in the terminating block. The synchronization circuit of the invention can be consequently and advantageously seen as an independent block capable of making the design of asynchronous interfaces highly modular.

Being the double sampling with the two opposite edges of the sampling clock the preferred sampling modality for recovery from metastability in the two directions inside the synchronizer P2P, it is necessary to consider the worst case affecting synchronization time $T_{SYNCHR}$ due to the skew of the two clocks and to the various delays that are introduced in the synchronizer P2P. Attention is drawn to the fact that the restriction imposed by the synchronizer circuit of the invention to the interarrival time $T_{INTR}$ between two successive input pulses $S_{IN}$, determines the maximum time of synchronization. The following relation expresses this restriction:

$$T_{INTR} \geq T_{SYNCHR} \tag{2}$$

The analysis of the timing waveforms of **Figure 3** allows evaluation of the time $T_{SYNCHR}$ for the worst case, so that the relation (2) shall refer to the worst $T_{SYNCHR}$ as the maximum time that is spent for synchronization. This expedient is useful for maintaining a good safeguard in the design. To define the worst $T_{SYNCHR}$ time, the following considerations are made:

- the widest phase offset between the signal S2 and the clock CLK2 takes away one period $T_{CLK2}$ of clock CLK2 at the output of flip-flop DFF1, a further half period $T_{CLK2}$ is taken by the flip-flop DFF2 for sampling; the sum is 1,5 period $T_{CLK2}$ for the two flip-flops DFF1 and DFF2;
- on account of phase offsets similar to the above mentioned offsets, a further delay of 1,5 period $T_{CLK1}$ of clock CLK1 is introduced by the flip-flops DFF3 and DFF4;
- the initial condition that must be restored to make the synchronizer ready to accept a new pulse, is reached when the signal S4 switches low, that is when the chain of events promoted by the signal S 1 completes the two routes of the loop, starting from and ending to the flip-flop SRFF1.

Therefore, it can be stated that the relation (2) is equivalent to the following expression:

$$T_{INTR} \geq (T_{SYNCHR} \text{ worst}) = (3T_{CLK2} + 4T_{CLK1}) \tag{3}$$

where CLK1 is the clock of the starting domain and CLK2 of the arrival domain. Expression (3) is not restrictive in the majority of practical applications, so it can be easily satisfied while achieving the great advantage of modularity.

If clock CLK2 is the fastest of the two clocks in **Figure 2,** a set of waveforms can be obtained by making the same considerations that have been made for the case discussed in relation to **Figure 3**. In such a case, the new waveforms would have the same phase relationship as the previous ones, nevertheless the inverted speed ratio between the two clocks affects the maximum $T_{SYNCHR}$ time, cause the clock asymmetry of the expression (3). The case presently discussed, namely in which clock CLK1 at the homonym pin of the P2P unit is faster than clock CLK2 at the homonym pin, is that with the shorter $T_{SYNCHR}$ time.

The synchronization unit P2P of the invention can be used to build a bidirectional synchronizer transferring a command, together with a strobe pulse for write or an alarm information, between two asynchronous clock domains. Using the P2P unit of the invention, it is possible to provide suitable control signals in order to regulate the transfer of Command and Alarm words, avoiding metastability and incorrect logic values.

It is useful to remind that one-bit command is associated with a pulse of one clock pulse duration, while one-bit alarm is associated either with a step of indefinite duration or with a pulse of one clock period duration. More one-bit commands in parallel "cluster" a command word and more one-bit alarms in parallel "cluster" an alarm word. A write strobe signal is always coupled to a command word.

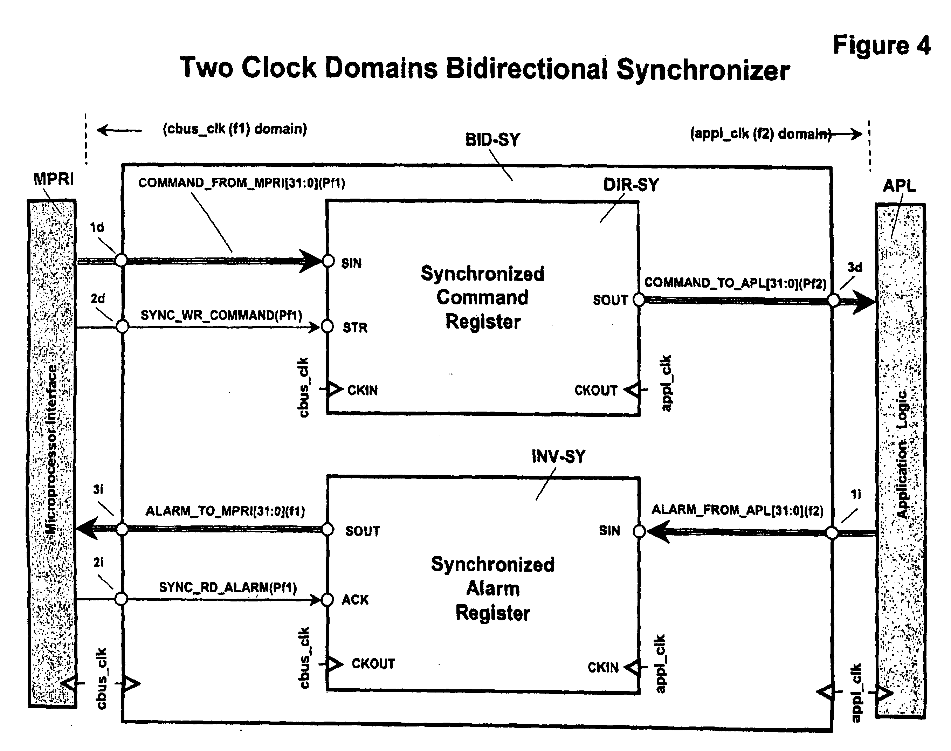

A basic diagram of the synchronizer of the invention is depicted in **Figure 4**. The block BID-SY representing a bidirectional synchronizer of the invention is interposed between a block MPRI representing a Microprocessor Interface and a block APL representing an Application Logic circuit driven through the microprocessor interface MPRI.

Block BID-SY is constituted by a synchronized command register DIR-SY and a synchronized alarm register INV-SY, that represents additional important aspects of the invention. The block DIR-SY has two inputs $S_{IN}$ and STR and an output $S_{OUT}$ and two clock pins CKIN and CKOUT. Block INV-SY has two inputs $S_{IN}$ and ACK and an output $S_{OUT}$ and two clock pins CKIN and CKOUT. The inputs SIN and STR of DIR-SY are connected to two corresponding inputs 1d and 2d of the main block BID-SY. Inputs 1d and 2d are connected to a data bus of the microprocessor interface MPRI carrying a signal COMMAND_FROM_MPRI[31:0](Pf1), and to an output of the microprocessor interface MPRI outputting a write strobe signal SYNC_WR_COMMAND(Pf1), respectively.

The output $S_{OUT}$ of the synchronized command register DIR-SY is connected to an output 3d of the block BID-SY; this output is further connected to an input of the application block APL for sending a command COMMAND_TO_APL[31:0](Pf2). To CKIN and CKOUT of the block DIR-SY are applied two respective clock signals CBUS_CLK and APPL_CLK, the first belonging to the clock domain of the microprocessor interface MPRI and the second to the clock domain of the block APL.

The inputs $S_{IN}$ and ACK of the synchronized alarm register INV-SY are connected to two corresponding inputs 1i and 2i of the main block BID-SY. The inputs 1i and 2i are further respectively connected to a data bus ALARM_FROM_APL[31:0](f2) of an application block APL and to a pin of microprocessor interface MPRI outputting an acknowledge signal SYNC_RD_ALARM(Pf1).

The output $S_{OUT}$ of the synchronized alarm register INV-SY is connected to the output pin 3i of the block BID-SY. The pin 3i is further connected to corresponding input of the microprocessor interface MPRI for sending an alarm ALARM_TO_MPR1[31:0](f1). The pins CKIN and CKOUT of the block INV-SY are coupled to two respective clock signals: APPL_CLK and CBUS_CLK, belonging to the respective clock domains of the block APL and of the microprocessor interface MPRI.

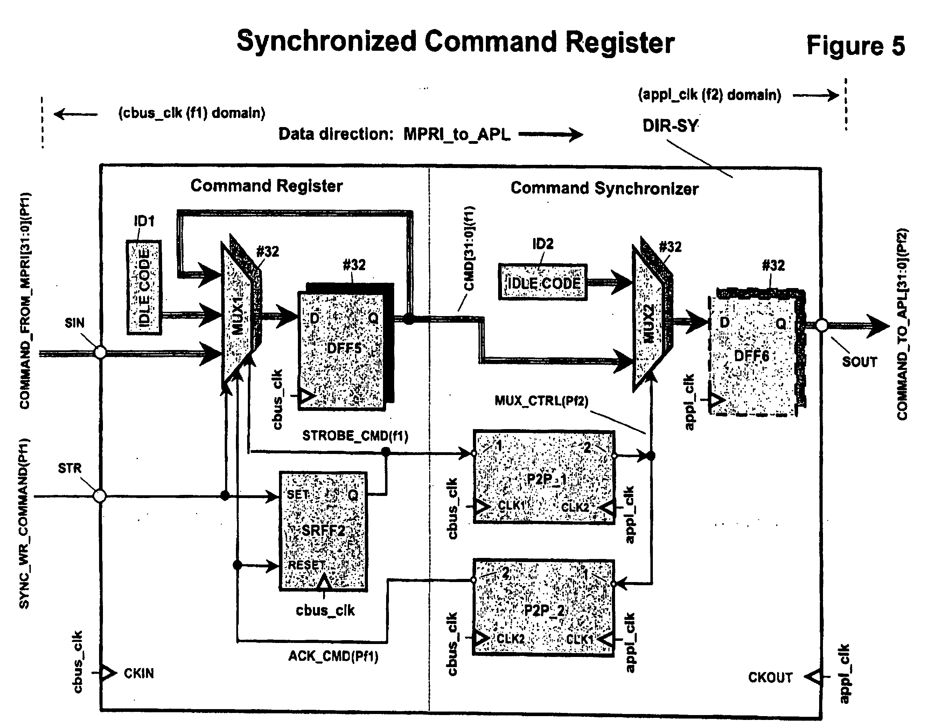

A detailed description of a preferred embodiment of the synchronized command register DIR-SY of **Figure 4** is depicted in **Figure 5**. Two sub-blocks, separated by a dashed line in the figure, compose the block: the first sub-block is named Command Register while the second sub-block is named Command Synchronizer.

The sub-block named Command Register may be embedded even into the microprocessor interface MPRI without changing the working principle of the synchronizer of the invention.

The synchronized command register DIR-SY includes: two identical blocks ID1 and ID2 producing a pre-established signal, a three-way multiplexer MUX1, a two-way multiplexer MUX2, a clocked set-reset flip-flop SRFF2, a first D-type flip-flop DFF5 and two identical synchronization circuits P2P_1 and P2P_2 of the invention. Optionally a second D-type flip- flop DFF6 sampling the output of the second multiplexer MUX2 can be used. The symbol #32 means that the shadowed blocks MUX1, DFF5, DFF6, and MUX2 have multiplicity/width 32 to operate on a 32 bits signal, alike to the number of bits of the data bus COMMAND_FROM_MPR1[31:0](Pf1). Symbols in parenthesis attached to the name of signals have the following meaning:

| Symbol | Meaning |
|---|---|
| <Signal name>(Pfi) | Signal <Signal name> is a pulse (of 1 clock period duration) associated to a clock of frequency fi and phase Phi |
| <Signal name>(fi) | Signal <Signal name> is a level signal associated to a clock of frequency fi and phase Phi |

The Command Register sub-block has the function of outputting the command word on the base of an input provided by the microprocessor interface MPRI. The Command Synchronizer sub-block has the function of synchronizing to the application clock APPL_CLK the command word provided by the first sub-block, which is synchronous to the clock CBUS_CLK.

The blocks ID1 and ID2 feed the multiplexers MUX1 and MUX2 with two identical fixed 32 bit patterns of logic ones and zeros, named IDLE CODE. This pattern is the hardwired binary translation of a parameter used as initialization value for the Command Register embedded into the Synchronized Command Register DIR-SY. Each bit of the command register represents an independent command. Thus, when the microprocessor interface MPRI wants to write a command to a specific bit N of the Command Register, it writes a bit of opposite value in respect to the bit having the same position in the IDLE CODE hard-wired into blocks ID1 and ID2.

As an example, if bit N of both blocks ID1 and ID2 is 0, than the command expressed by the bit N is active high (the opposite of the one hard-wired into bit N of the IDLE CODE). The microprocessor interface MPRI writes 1 to the Nth bit of the Command Register, while the remaining bits are set equal to the same value that is hard-wired into blocks ID1 and ID2.

The written word is sent from microprocessor interface MPRI on COMMAND_FROM_MPRI[31:0](Pf1) bus. This word is paired with a relative strobe pulse SYNC_WR_COMMAND(Pf1), which is sent on a separate wire. Both signals COMMAND_FROM_MPRI[31:0](Pf1) and SYNC_WR_COMMAND(Pf1) are pulse signals associated to clock CBUS_CLK at frequency f1 and phase PH1.

The pulse SYNC_WR_COMMAND(Pf1) sets the SRFF2 flip-flop, which asserts the STROBE_CMD(f1) signal, and at the same time the pulse causes the multiplexer MUX1 to switch from the idle position (selecting the IDLE CODE) to the selection of the input signal COMMAND_FROM_MPRI[31:0](Pf1). As a consequence, the flip-flop DFF5 samples the value sent from the microprocessor interface MPRI and the bit N on CMD[31:0](f1) bus switches from 0 to 1.

When the SRFF2 flip-flop is set the STROBE_CMD(f1) signal switches to the active level. This event is coupled to the outputting of the command CMD[31:0](f1). The signal SYNC_WR_COMMAND(Pf1) lasts one clock pulse of CBUS_CLK and when it is negated, the signal STROBE_CMD(f1) is asserted and the multiplexer MUX1 holds the output of DFF5.

More precisely, the multiplexer MUX1 holds the output of DFF5 when both SYNC_WR_COMMAND(Pf1) and ACK_CMD(Pf1) are negated and STROBE_CMD(f1) is asserted, selects the IDLE CODE regardless to the values of other selection inputs when ACK_CMD(Pf1) is asserted, selects the input connected to the data bus at the SIN input when SYNC_WR_COMMAND(Pf1) is asserted and other selection signals are negated. At this point the command on bit N has been provided. This command is synchronous with clock CBUS_CLK with frequency f1 and phase PH1.

The pulse carried by the STROBE_CMD(f1) signal is sent to the input pin 1 of the P2P_1 unit. This block translates the signal at frequency f1 and phase PH1 associated to the clock CBUS_CLK into a pulse at frequency f2 and phase PH2 associated to the clock APPL_CLK. This last pulse, renamed MUX_CTRL(Pf2), is output from pin 2 of the P2P_1 unit and drives the selection on multiplexer MUX2. As a consequence the multiplexer MUX2 switches from its idle position selecting the block ID2 to the selection of the input of data pattern CMD[31:0](f1).

The bit N of CMD[31:0](f1) is provided to the flip-flop DFF6 to be sampled by the clock APPL_CLK (with frequency f2 and phase PH2). This sampling cannot lead the DFF6 flip-flop into a metastable state because within the setup/hold window centred across the rising edge of APPL_CLK, the signals composing CMD[31:0](fl) are all stable. This happens because, when STROBE_CMD(f1) signal is asserted, all bits of the bus CMD[31:0](f1) are stable because the output of the flip-flop DFF5 is stable as long as ACK_CMD(Pf1) signal is negated.

The pulse signal MUX_CTRL(Pf2) output by pin 2 of P2P_1 unit is asserted after the assertion of incoming STROBE_CMD(f1) signal inputting P2P_1 unit on pin 1. So when the multiplexer MUX2 driven by MUX_CTRL(Pf2) signal switches its input, the data CMD[3 1:0](f1) are stable.

The same output pin 2 of P2P_1 unit, driving the MUX_CTRL(Pf2) signal, also drives the input pin 1 of P2P_2 unit, which outputs on pin 2 a pulse signal ACK_CMD(Pf1)..

The pulse ACK_CMD(Pf1), which is synchronous to clock CBUS_CLK of frequency f1 and phase PH1, causes the multiplexer MUX1 to switch to the input connected to the IDLE CODE block ID1, thus so the flip-flop DFF5 samples the hard-wired pattern IDLE CODE and idle condition is restored. This means that bit N switches from 1 to 0, which is the idle value set by the hard-wired pattern IDLE CODE.

As stated above, the presence of the flip-flop DFF6 is optional: its presence decouples the Application Logic block APL from the presence of delays due to the propagation delay in the multiplexer MUX2. The use of such a flip-flop DFF6 though preferable is a matter of choices.

A representation of waveforms of the signals belonging to the block DIR-SY can be readily inferred from those of **Figure 3.** In such a bidirectional embodiment, the maximum time spent in synchronization $T_{SYNCHR}$ is about twice the time defined by the relation (3) concerning the single unit P2P of **Figure 2,** because two identical units, namely P2P_1 and P2P_2, are connected in series for completing a single synchronization transaction.

The above clearly indicates that the circuit diagram of **Figure 5,** in which two P2P units are nested as building blocks, is able to reproduce the same functions of the circuit diagram of a single unit P2P though at a higher level.

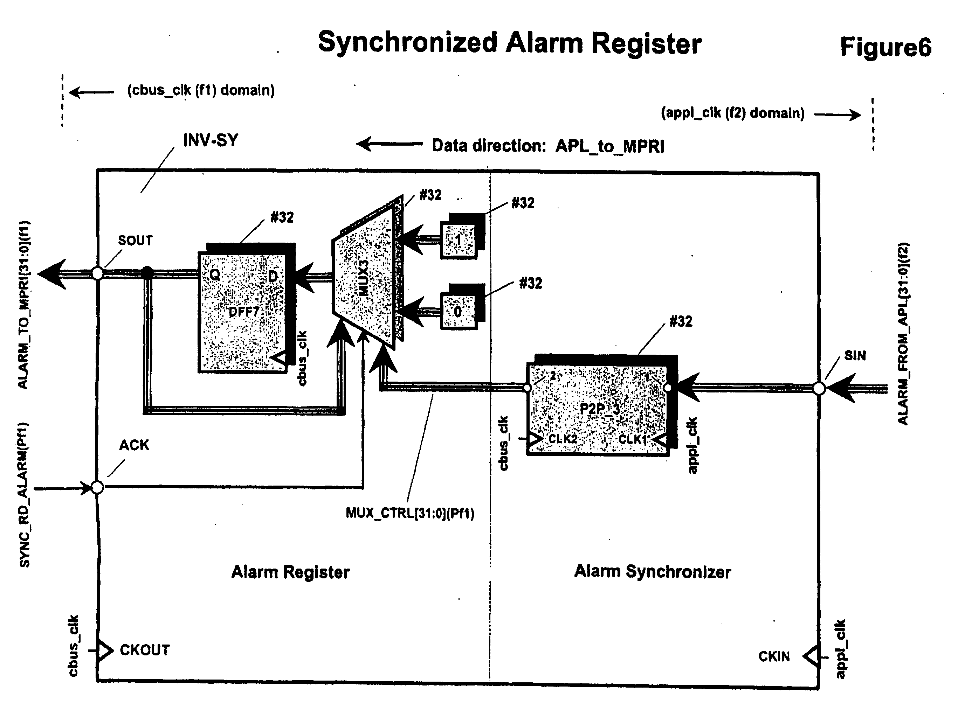

A detailed diagram of a preferred embodiment of a synchronized alarm register INV-SY of **Figure 4** is depicted in **Figure 6.** Two sub-blocks separated by a dashed line compose the block. The first sub-block is named Alarm Register while the second sub-block is named Alarm Synchronizer.

Naturally, the sub-block named Alarm Register may even be embedded into the microprocessor interface MPRI without affecting the working principle of the synchronizer of the invention.

The synchronized alarm register of the invention INV-SY includes: one two-way multiplexer MUX3, one hard-

wired logic one block, one hardwired logic zero block, one D-type flip-flop DFF7 and a synchronization circuit P2P_3 of the invention. The symbol #32 means that the shadowed hardwired zero and one blocks, MUX3, DFF7 and P2P_3 operate on a 32 bits signal, that is with the same number of bits as the bits of the buses ALARM_FROM_APL[31:0] (f2) and ALARM_TO_MPRI[31:0](f1). The Nth bit (with N belonging to the interval 1 to 32) of each block of **Figure 6** is connected to a corresponding Nth bit of respective 32 bit wide buses. The only exception to this rule is the SYNC_RD_ALARM(Pf1) signal which is unique for all instance of multiplexer MUX3. The shadowed blocks can also be considered as multiple instances (from 1 to 32) of a component arranged according to the so called "bit slice" technique, where the instance N is charged of manipulating the Nth bit. This vision is particularly suited to understand the working principle and will be used for this purpose.

The Alarm Register sub-block has the function of trapping the alarm provided by the application logic APL via the Alarm Synchronizer sub-block. The Alarm Synchronizer sub-block has the function of synchronizing to the clock CBUS_CLK the alarm provided by the application logic APL, which is synchronous to the clock APPL_CLK.

Each bit of the signal ALARM_FROM_APL[31:0](f2) carries an alarm from application logic block APL. In the same way each bit of the signal ALARM_TO_MPRI[31:0](f1) carries an alarm to the microprocessor interface MPRI. An acknowledge signal SYNC_RD_ALARM(Pf1) is provided to the ACK input pin for indicating that the signal ALARM_TO_MPR1[31:0](Pf1) has been read by the microprocessor interface MPRI.

The operation of the Synchronized Alarm Register is described starting from idle conditions. In idle state the Q output of each slice of DFF7, SYNC_RD_ALARM(Pf1) and MUX_CTRL[31:0](Pf1) are negated (zero) and each slice of the multiplexer MUX3 selects its hardwired zero input.

When an alarm bit, let us suppose the Nth bit, reaching the SIN input pin of the Alarm Synchronizer sub-block is asserted, it is translated into a pulse synchronous to the clock CBUS_CLK from the Nth slice P2P_3 block. Assertion of MUX_CTRL[N](Pf1) causes the Nth slice of multiplexer MUX3 to select the hardwired one input, so Nth slice of the flip-flop DFF7 is input with a "one". After sampling, this asserted value is outputted on the Q output of the Nth slice of DFF7.

The selection logic of the Nth slice of multiplexer MUX3 is designed to select its hardwired logic one until the selection signal output from the Q pin of the Nth slice of flip-flop DFF7 is asserted. In this way the alarm is trapped and is retained regardless to the value of the signal ALARM_FROM_APL[N](Pf2).

The only way to reset DFF7 is through the assertion of the signal SYNC_RD_ALARM(Pf1) by the microprocessor interface MPRI. In this way a new alarm can be trapped.

**Claims**

1. A synchronization circuit (P2P) for interfacing a first digital circuit clocked with a first clock (CLK1) and a second digital circuit clocked with a second clock (CLK2) that may be different from said first clock (CLK1) in terms of frequency and/or phase constituted by a transmitting section clocked with said first clock (CLK1) and a receiving section clocked with said second clock (CLK2), **characterized in that** said

   transmitting section comprises

      an input edge detector (FR0) of an input signal ($S_{IN}$) from said first digital circuit producing a set pulse signal (S1),
      a block (SRFF1) coupled to said set pulse signal (S1) producing a first signal (S2) if said set pulse signal (S1) is asserted until a reset pulse signal (S5) is received, and **in that** said

   receiving section comprises

      a first metastability recovery block producing a second signal (S3) by sampling said first signal (S2) a first pre-established number of times with said second clock (CLK2),
      an output edge detector (FR1) of said second signal (S3) producing an output pulse signal (S6), to said second digital circuit,

      a feedback section clocked with said first clock (CLK1) comprising

         a second metastability recovery block producing a third signal (S4) by sampling said second signal (S3) a second pre-established number of times with said first clock (CLK1),
         a feedback edge detector (FR2) of said third signal (S4) producing said reset pulse signal (S5).

2. The synchronization circuit of claim 1 wherein said first metastability recovery block is a cascade of at least a first type D flip-flop clocked on raising clock edges and a second type D flip-flop clocked on falling clock edges.

3. The synchronization circuit according to one of the preceding claims wherein said second metastability recovery block is a cascade of at least a third type D flip-flop clocked on raising clock edges and a fourth type D flip-flop clocked on falling clock edges.

4. The synchronization circuit according to one of the preceding claims wherein said block (SRFF1) is a set-reset flip-flop having said set pulse signal (S1) as set input and said reset pulse signal (S5) as reset input.

5. The synchronization circuit according to one of the preceding claims wherein said first pre-established number is equal to two.

6. The synchronization circuit according to one of the preceding claims wherein said second pre-established number is equal to two.

7. A synchronized alarm register for trapping and transferring an application alarm signal (ALARM_FROM_APL(f2)) from an application circuit (APL) clocked with a third clock (APPL_CLK) to said microprocessor interface (MPRI) clocked with a fourth clock (CBUS_CLK) that may be different in terms of frequency and/or phase from said third clock (APPL_CLK) constituted by

an alarm synchronizer comprising at least a synchronization circuit (P2P) according to one of claims from 1 to 6 being input with said application alarm signal (ALARM_FROM_APL(f2)) and said clocks third (APPL_CLK) and fourth (CBUS_CLK) producing a synchronized alarm signal (MUX_CTRL(Pf1)),

an alarm register trapping said synchronized alarm signal and providing to said microprocessor interface (MPRI) an output alarm signal (ALARM_TO_MPR1(f1)) until an acknowledgement signal (SYNC_RD_ALARM (Pf1)) provided by said microprocessor interface (MPRI) is received.

8. The synchronized alarm register of claim 7 wherein said alarm register comprises

a logic block producing an active logic value (1),
a logic block producing a logic zero value (0),
a multiplexer (MUX3) coupled with said active logic value (1), said logic zero value (0), said output alarm signal (ALARM_TO_MPRI(f1)), said acknowledgement signal (SYNC_RD_ALARM(Pf1)) and said alarm word (MUX_CTRL(Pf1)), outputting a signal (M3) equal to said logic zero value (0) if said acknowledgement signal (SYNC_RD_ALARM(Pf1)) has an active logical value or if both said output alarm signal (ALARM_TO_MPRI (f1)) and said synchronized alarm signal (MUX_CTRL(Pf1)) have a logic zero value, or equal to said active logic value (1) if said output alarm signal (ALARM_TO_MPRI(f1)) or said synchronized alarm signal (MUX_CTRL(Pf1)) assumes its active logical value while said acknowledgement signal (SYNC_RD_ALARM (Pf1)) assumes its logic zero value,
a D type flip-flop reading said signal (M3) at clock edges of said fourth clock (CBUS_CLK).

9. A synchronized command register forming and transferring a command signal basing on an input data signal (S_IN) with a strobe signal (STR) from a microprocessor interface (MPR1) clocked with a fourth clock (CBUS_CLK) to an application circuit (APL) clocked with a third clock (APPL_CLK) that may be different from said fourth clock (CBUS_CLK) in terms of frequency and/or phase constituted by

a command register clocked with said fourth clock (CBUS_CLK) comprising

a strobe trapping circuit coupled to said strobe signal (STR) outputting a second strobe signal (STROBE_CMD(f1)) if said strobe signal (STR) has been activated until an acknowledge signal (ACK_CMD(Pf1)) is received,
an input selection and hold circuit coupled with said input data signal (S_IN) outputting a second data signal (CMD(f1)) equal to said input data signal (S_IN) if said strobe signal (STR) or said second strobe signal (STROBE_CMD(f1)) are activated, or equal to a first idle signal (ID1) if said acknowledge signal (ACK_CMD(Pf1)) is received;

a command synchronizer being input said second data signal (CMD(f1)) and said second strobe signal (STROBE_CMD(f1)) clocked with said fourth clock (CBUS_CLK) comprising

a first synchronization circuit (P2P_1) according to one of claims from 1 to 6 being input with said a second strobe signal (STROBE_CMD(f1)) producing an output strobe signal (MUX_CTRL(Pf2)) clocked with said third clock (APPL_CLK),

an output selection and hold circuit providing to said application circuit (APL) a second idle signal (ID2) or said second data signal (CMD(f1)) depending on said output strobe signal (MUX_CTRL(Pf2)),

a second synchronization circuit (P2P_2) according to one of claims from 1 to 6 being input with said output strobe signal (MUX_CTRL(Pf2)) clocked with said third clock (APPL_CLK), producing said acknowledge signal (ACK_CMD(Pf1)) clocked with said fourth clock (CBUS_CLK).

10. The synchronized command register of claim 9 wherein said strobe trapping circuit comprises a set-reset flip flop whose set input is said strobe signal (STR) and said reset signal is said acknowledge signal (ACK_CMD(Pf1)).

11. The synchronized command register according to one of claims from 9 to 10 wherein said input selection and hold circuit comprises

a first idle code generator producing said first idle signal (ID1),

a multiplexer (MUX1) coupled with said first idle signal (ID1), input data signal ($S_{IN}$), second data signal (CMD(f1)), strobe signal (STR), acknowledge signal (ACK_CMD(Pf1)) and said second strobe signal (STOBE_CMD(f1)) outputting an intermediate data signal equal to said input data signal ($S_{IN}$) if said strobe signal (STR) or said second strobe signal (STOBE_CMD(f1)) are activated, or equal to said first idle signal (ID1) if said acknowledge signal (ACK_CMD(Pf1)) is received,

a D type flip-flop input with said intermediate signal producing said second data signal (CMD(f1)).

12. The synchronized command register according to one of claims from 9 to 11 wherein said output circuit comprises

a second idle code generator producing said second idle signal (ID2),

a second multiplexer (MUX2) coupled with said second idle signal (ID2), said second data signal (CMD(f1)) and said output strobe signal (MUX_CTRL(Pf2)) providing an output signal to said application circuit (APL).

13. The synchronized command register according to one of claims from 9 to 12 wherein said second multiplexer (MUX2) is coupled to said application circuit (APL) by means of a D type flip-flop clocked with said third clock (APPL_CLK).

14. A bidirectional synchronizer transferring digital words with a strobe signal (STR) from a microprocessor interface (MPR1) functioning with a first clock (CLK1) to an application circuit (APL) functioning with a second clock (CLK2) that may be different from said first clock (CLK1) in terms of frequency and/or phase and alarm signals from said application circuit (APL) to said microprocessor interface (MPR1) comprising a synchronized command register according one of claims from 9 to 13 and a synchronized alarm register according to claims 7 or 8.

**Patentansprüche**

1. Synchronisierschaltung (P2P), die zwischen einer ersten digitalen Schaltung, die mit einem ersten Takt (CLK1) getaktet wird, und einer zweiten digitalen Schaltung, die mit einem zweiten Takt (CLK2), der von dem ersten Takt (CLK1) hinsichtlich Frequenz und/oder Phase verschieden sein kann, getaktet wird, eine Schnittstelle bildet und durch einen Sendeabschnitt, der durch den ersten Takt (CLK1) getaktet wird, und durch einen Empfangsabschnitt, der durch den zweiten Takt (CLK2) getaktet wird, gebildet ist,
   **dadurch gekennzeichnet, dass**
      der Sendeabschnitt umfasst:

      einen Eingangsflankendetektor (FR0) eines Eingangssignals ($S_{IN}$) von der ersten digitalen Schaltung, der ein Setzimpulssignal (S1) erzeugt, und
      einen Block (SRFF1), der mit dem Setzimpulssignal (S1) gekoppelt ist und ein erstes Signal (S2) erzeugt, wenn das Setzimpulssignal (S1) aktiv ist, bis ein Rücksetzimpulssignal (S5) empfangen wird, und
      dass der Empfangsabschnitt umfasst:

      einen ersten Metastabilitätswiederherstellungsblock, der durch Abtasten des ersten Signals (S2) in einer im Voraus festgelegten ersten Anzahl mit dem zweiten Takt (CLK2) ein zweites Signal (S3) erzeugt,

einen Ausgangsflankendetektor (FR1) des zweiten Signals (S3), der ein Ausgangsimpulssignal (S6) zu der zweiten digitalen Schaltung erzeugt, und

wobei ein Rückkopplungsabschnitt, der mit dem ersten Takt (CLK1) getaktet wird, umfasst:

einen zweiten Metastabilitätswiederherstellungsblock, der durch Abtasten des zweiten Signals (S3) in einer im Voraus festgelegten zweiten Anzahl mit dem ersten Takt (CLK1) ein drittes Signal (S4) erzeugt, und
einen Rückkopplungsflankendetektor (FR2) des dritten Signals (S4), der das Rücksetzimpulssignal (S5) erzeugt.

2. Synchronisierschaltung nach Anspruch 1, bei der der erste Metastabilitätswiederherstellungsblock eine Kaskadenschaltung aus wenigstens einem D-Flipflop eines ersten Typs, das mit den Taktanstiegsflanken getaktet wird, und aus einem D-Flipflop eines zweiten Typs, das mit den Taktabstiegsflanken getaktet wird, ist.

3. Synchronisierschaltung nach einem der vorhergehenden Ansprüche, bei der der zweite Metastabilitätswiederherstellungsblock eine Kaskade aus wenigstens einem D-Flipflop eines dritten Typs, das mit den Taktanstiegsflanken getaktet wird, und aus einem D-Flipflop eines vierten Typs, das mit den Taktabstiegsflanken getaktet wird, ist.

4. Synchronisierschaltung nach einem der vorhergehenden Ansprüche, bei der der Block (SRFF1) ein Setz-Rücksetz-Flipflop ist, das als Setzeingang das Setzimpulssignal (S1) und als Rücksetzeingang das Rücksetzimpulssignal (S5) besitzt.

5. Synchronisierschaltung nach einem der vorhergehenden Ansprüche, bei der die im Voraus festgelegte erste Anzahl gleich zwei ist.

6. Synchronisierschaltung nach einem der vorhergehenden Ansprüche, bei der die im Voraus festgelegte zweite Anzahl gleich zwei ist.

7. Synchronisiertes Alarmregister zum Auffangen und Übertragen eines Anwendungsalarmsignals (ALARM_FROM_APL(f2)) von einer mit einem dritten Takt (APPL_CLK) getakteten Anwendungsschaltung (APL) an die Mikroprozessorschnittstelle (MPRI), die durch einen vierten Takt (CBUS_CLK) getaktet wird, der hinsichtlich Frequenz und/oder Phase von dem dritten Takt (APL_CLK) verschieden sein kann, wobei das Register gebildet ist durch
einen Alarmsynchronisierer, der wenigstens eine Synchronisierschaltung (P2P) nach einem der Ansprüche 1 bis 6 umfasst, in den das Anwendungsalarmsignal (ALARM_FROM_APL(f2)) sowie der dritte Takt (APL_CLK) und der vierte Takt (CBUS_CLK) eingegeben werden und der ein synchronisiertes Alarmsignal (MUX_CTRL(Pf1)) erzeugt,
ein Alarmregister, das das synchronisierte Alarmsignal auffängt und für die Mikroprozessorschnittstelle (MPRI) ein Ausgangsalarmsignal (A-LARM_TO_MPRI(f1)) erzeugt, bis ein von der Mikroprozessorschnittstelle (MPRI) erzeugtes Quittierungssignal (SYNC_RD_ALARM(Pf1)) empfangen wird.

8. Synchronisiertes Alarmregister nach Anspruch 7, wobei das Alarmregister umfasst:

einen Logikblock, der einen aktiven logischen Wert ( 1 ) erzeugt,
einen Logikblock, der einen logischen Nullwert (0) erzeugt,
einen Multiplexer (MUX3), der mit dem aktiven logischen Wert (1), dem logischen Nullwert (0), dem Ausgangsalarmsignal (ALARM_TO_MPRI(f1)), dem Quittierungssignal (SYNC_RD_ALARM(Pf1)) und dem Alarmwort (MUX_CTRL(Pf1)) gekoppelt ist und ein Signal (M3) ausgibt, das gleich dem logischen Nullwert (0) ist, falls das Quittierungssignal (SYNC_RD_ALARM(Pf1)) einen aktiven logischen Wert hat oder falls sowohl das Ausgangsalarmsignal (ALARM_TO_MPRI(f1)) als auch das synchronisierte Alarmsignal (MUX_CTRL(Pf1)) einen logischen Nullwert haben, oder gleich dem aktiven logischen Wert (1) ist, falls das Ausgangsalarmsignal (ALARM_TO_MPRI(f1)) oder das synchronisierte Alarmsignal (MUX_CTRL(Pf1)) seinen aktiven logischen Wert annimmt, während das Quittierungssignal (SYNC_RD_ALARM(Pf1)) seinen logischen Nullwert annimmt, und
ein D-Flipflop, das das Signal (M3) bei den Taktflanken des vierten Takts (CBUS_CLK) liest.

9. Synchronisiertes Befehlsregister, das anhand eines Eingangsdatensignals (SIN) mit einem Strobesignal (STR) ein Befehlssignal formt und von einer Mikroprozessorschnittstelle (MPRI), die mit einem vierten Takt (CBUS_CLK) getaktet wird, an eine Anwendungsschaltung (APL), die mit einem dritten Takt (APL_CLK), der von dem vierten Takt (CBUS_CLK) hinsichtlich Frequenz und/oder Phase verschieden sein kann, getaktet wird, überträgt, wobei das Register gebildet ist durch:

ein Befehlsregister, das mit dem vierten Takt (CBUS_CLK) getaktet wird und umfasst:

eine Strobeauffangschaltung, die mit dem Strobesignal (STR) gekoppelt ist und ein zweites Strobesignal (STROBE_CMD(f1)) ausgibt, wenn das Strobesignal (STR) aktiviert gewesen ist, bis ein Quittierungssignal (ACK_CMD(Pf1)) empfangen wird, und
eine Eingangs-Auswahl- und -Halteschaltung, die mit dem Eingangsdatensignal ($S_{IN}$) gekoppelt ist und ein zweites Datensignal (CMD(f1)) ausgibt, das gleich dem Eingangsdatensignal ($S_{IN}$) ist, falls das Strobesignal (STR) oder das zweite Strobesignal (STROBE_CMD(f1)) aktiviert sind, oder gleich einem ersten Leerlaufsignal (ID1) ist, falls das Quittierungssignal (ACK_CMD(Pf1)) empfangen wird; und

einen Befehlssynchronisierer, in den das zweite Datensignal (CMD(f1)) und das zweite Strobesignal (STROBE_CMD(f1)) eingegeben werden, der mit dem vierten Takt (CBUS_CLK) getaktet wird und der umfasst:

eine erste Synchronisierschaltung (PSP_1) nach einem der Ansprüche 1 bis 6, in die das zweite Strobesignal (STROBE_CMD(f1)) eingegeben wird und die ein Ausgangsstrobesignal (MUX_CTRL(Pf2)), das mit dem dritten Takt (APL_CLK) getaktet wird, erzeugt,
eine Ausgangs-Auswahl- und -Halteschaltung, die für die Anwendungsschaltung (APL) in Abhängigkeit von dem Ausgangsstrobesignal (MUX_CTRL(Pf2)) ein zweites Leerlaufsignal (ID2) oder das zweite Datensignal (CMD(f1)) bereitstellt, und
eine zweite Synchronisierschaltung (PSP_2) nach einem der Ansprüche 2 bis 6, in die das Ausgangsstrobesignal (MUX_CTRL(Pf2)) eingegeben wird, das mit dem dritten Takt (APPL_CLK) getaktet wird, und die das Quittierungssignal (ACK_CMD(Pf1)), das mit dem vierten Takt (CBUS_CLK) getaktet wird, erzeugt.

10. Synchronisiertes Befehlsregister nach Anspruch 9, bei dem die Strobeauffangschaltung ein Setz-Rücksetz-Flipflop umfasst, dessen Setzeingang das Strobesignal (STR) ist und dessen Rücksetzeingang das Quittierungssignal (ACK_CMD(Pf1)) ist.

11. Synchronisiertes Befehlsregister nach einem der Ansprüche 9 bis 10, bei dem die Eingangs-Auswahl- und -Halteschaltung umfasst:

einen ersten Leerlaufcode-Generator, der das erste Leerlaufsignal (ID1) erzeugt,
einen Multiplexer (MUX1), der mit dem ersten Leerlaufsignal (ID1), dem Eingangsdatensignal ($S_{IN}$), dem zweiten Datensignal (CMD(f1)), dem Strobesignal (STR), dem Quittierungssignal (ACK_CMD(Pf1)) und dem zweiten Strobesignal (STROBE_CMD(f1)) gekoppelt ist und ein Zwischendatensignal ausgibt, das gleich dem Eingangsdatensignal ($S_{IN}$) ist, falls das Strobesignal (STR) oder das zweite Strobesignal (STROBE_CMD(f1)) aktiviert ist, oder gleich dem ersten Leerlaufsignal (ID1) ist, falls das Quittierungssignal (ACK_CMD(Pf1)) empfangen wird, und
ein D-Flipflop, in das das Zwischensignal eingegeben wird und das das zweite Datensignal (CMD(f1)) erzeugt.

12. Synchronisiertes Befehlsregister nach einem der Ansprüche 9 bis 11, bei dem die Ausgangsschaltung umfasst:

einen zweiten Leerlaufcode-Generator, der das zweite Leerlaufsignal (ID2) erzeugt,
einen zweiten Multiplexer (MUX2), der mit dem zweiten Leerlaufsignal (ID2), dem zweiten Datensignal (CMD(f1)) und dem Ausgangsstrobesignal (MUX_CTRL(Pf2)) gekoppelt ist und ein Ausgangssignal für die Anwendungsschaltung (APL) bereitstellt.

13. Synchronisiertes Befehlsregister nach einem der Ansprüche 9 bis 12, bei dem der zweite Multiplexer (MUX2) mit der Anwendungsschaltung (APL) durch ein D-Flipflop gekoppelt ist, das mit dem dritten Takt (APL_CLK) getaktet wird.

14. Bidirektionaler Synchronisierer, der digitale Wörter mit einem Strobesignal (STR) von einer Mikroprozessorschnittstelle (MPRI), die mit einem ersten Takt (CLK1) arbeitet, an eine Anwendungsschaltung (APL), die mit einem zweiten Takt (CLK), der von dem ersten Takt (CLK1) hinsichtlich Frequenz und/oder Phase verschieden sein kann, arbeitet, und Alarmsignale von der Anwendungsschaltung (APL) an die Mikroprozessorschnittstelle (MPRI) überträgt und ein synchronisiertes Befehlsregister nach einem der Ansprüche 9 bis 13 sowie ein synchronisiertes Alarmregister nach den Ansprüchen 7 oder 8 umfasst.

**Revendications**

1. Circuit de synchronisation (P2P) pour faire interface entre un premier circuit numérique cadencé par une première horloge (CLK1) et un second circuit numérique cadencé par une seconde horloge (CLK2) qui peut être différente de la première horloge (CLK1) en ce qui concerne sa fréquence et/ou sa phase, constitué d'une partie d'émission cadencée par la première horloge (CLK1) et d'une partie de réception cadencée par la seconde horloge (CLK2), **caractérisé en ce que** :

   la partie d'émission comprend :

   un détecteur de front d'entrée (FR0) d'un signal d'entrée ($S_{IN}$) en provenance du premier circuit numérique, produisant un signal d'impulsion d'initialisation (S1),
   un bloc (SRFF1) couplé au signal d'impulsion d'initialisation (S1) produisant un premier signal (S2) si le signal d'impulsion d'initialisation (S1) est fourni jusqu'à ce qu'un signal d'impulsion de remise à zéro (S5) soit reçu, et

   la partie de réception comprend :

   un premier bloc de compensation de métastabilité produisant un second signal (S3) en échantillonnant le premier signal (S2) un premier nombre de fois préétabli au moyen de la seconde horloge (CLK2),
   un détecteur de front de sortie (FR1) du second signal (S3) produisant un signal en impulsion de sortie (S6) vers le second circuit numérique,

   une partie de réaction cadencée par la première horloge (CLK1) comprend :

   un second circuit de compensation de métastabilité produisant un troisième signal (S4) en échantillonnant le second signal (S3) un second nombre de fois préétabli au moyen de la première horloge (CLK1),
   un détecteur de front de réaction (FR2) du troisième signal (S4) produisant le signal en impulsion de remise à zéro (S5).

2. Circuit de synchronisation selon la revendication 1, dans lequel le premier bloc de compensation de métastabilité est une cascade d'au moins une première bascule de type D cadencée par des fronts d'horloge montants et une deuxième bascule de type D cadencée par des fronts d'horloge descendants.

3. Circuit de synchronisation selon l'une quelconque des revendications précédentes, dans lequel le second bloc de compensation de métastabilité est une cascade d'au moins une troisième bascule de type D déclenchée sur des fronts d'horloge descendants et une quatrième bascule de type D déclenchée sur des fronts d'horloge descendants.

4. Circuit de synchronisation selon l'une quelconque des revendications précédentes, dans lequel ledit bloc (SRFF1) est un bloc d'initialisation/remise à zéro ayant ledit signal d'impulsion d' initialisation (S1) comme entrée d'initialisation et ledit signal de remise à zéro (S5) comme entrée de remise à zéro.

5. Circuit de synchronisation selon l'une quelconque des revendications précédentes, dans lequel le premier nombre préétabli est égal à deux.

6. Circuit de synchronisation selon l'une quelconque des revendications précédentes, dans lequel le second nombre préétabli est égal à deux.

7. Registre d'alarme synchronisé pour piéger et transférer un signal d'alarme d'application (ALARM_FROM_APL(f2)) en provenance d'un circuit d'application (APL) cadencé par une troisième horloge (APPL_CLK) vers l'interface de microprocesseur (MPR1) cadencée par une quatrième horloge (CBUS_CLK) qui peut être différente en fréquence et/ou en phase de la troisième horloge (APPL_CLK), constitué par :

un circuit de synchronisation d'alarme comprenant au moins un circuit de synchronisation (P2P) selon l'une quelconque des revendications 1 à 6, recevant le signal d'alarme de l'application (ALARM_FROM_APL(f2)), lesdites troisième (APPL_CLK) et quatrième (CBUS_CLK) horloges produisant un signal d'alarme synchronisé (MUX_CTRL(Pf1)),

un registre d'alarme piégeant le signal d'alarme synchronisé et fournissant à l'interface du microprocesseur (MPR1) un signal d'alarme de sortie (ALARM_TO_MPR1(f1)) jusqu'à qu'un signal d'accusé réception (SYNC_RD_ALARM(Pf1)) fourni par l'interface du microprocesseur (MPR1) soit reçu.

8. Registre d'alarme synchronisé selon la revendication 7, dans lequel le registre d'alarme comprend :

un bloc logique produisant une valeur logique active (1),
un bloc logique produisant une valeur logique nulle (0),
un multiplexeur (MUX3) couplé à la valeur logique active (1), à la valeur logique nulle (0), au signal d'alarme de sortie (ALARM_TO_MPR1(f1)), au signal d'accusé réception (SYNC_RD_ALARM(Pf1)) et au mot d'alarme (MUX_CTRL(Pf1)), fournissant un signal (M3) égal à la valeur logique (0) si le signal d'accusé réception (SYNC_RD_ALARM(Pf1)) a une valeur logique active ou si les deux signaux d'alarme de sortie (ALARM_TO_MPR1(f1)) et le signal d'alarme synchronisé (MUX_CTRL(Pf1)) ont une valeur logique nulle, ou égale à ladite valeur logique active (1) si le signal d'alarme de sortie (ALARM_TO_MPR1(f1)) ou le signal d'alarme synchronisé (MUX_CTRL(Pf1)) prend sa valeur logique active tandis que le signal d'accusé réception (SYNC_RD_ALARM(Pf1)) prend sa valeur logique nulle,
une bascule de type D lisant un signal (M3) au niveau des fronts d'horloge de la quatrième horloge (CBUS_CLK).

9. Registre de commande synchronisé formant et transférant un signal de commande basé sur un signal de données d'entrée ($S_{IN}$) au moyen d'un signal d'échantillonnage ( STR) en provenance d'une interface de microprocesseur (MPR1) cadencé par une quatrième horloge (CBUS_CLK) vers un circuit d'application (APL) déclenché par une troisième horloge (APPL_CLK) qui peut être différente de la quatrième horloge (CBUS_CLK) en ce qui concerne sa fréquence et/ou sa phase, constitué par :

un registre de commande cadencé par la quatrième horloge (CBUS_CLK) comprenant :

un circuit de piège d'impulsion d'échantillonnage couplé au signal d'échantillonnage (STR) fournissant le second signal d'échantillonnage (STROBE_CMD(f1)) si le signal d'échantillonnage (STR) a été activé, jusqu'à ce qu'un signal d'accusé réception (ACK_CMD(Pf1)) soit reçu,
un circuit de sélection et de maintien d'entrée couplé au signal de données d'entrée (SIN) fournissant un second signal de données (CMD(f1)) égal au signal de données d'entrée (SIN) si le signal d'échantillonnage (STR) ou le second signal d'échantillonnage (STROBE_CMD(f1)) est activé, ou égal à un premier signal de repos (ID1) si le signal d'accusé réception (ACK_CMD(Pf1)) est reçu ;
un circuit de synchronisation de commande recevant le second signal de données (CMD(f1)) et le second signal d'échantillonnage (STROBE_CMD(f1)) cadencé par la quatrième horloge (CBUS_CLK), comprenant :
un premier circuit de synchronisation (P2P_1) selon l'une des revendications 1 à 6, recevant le second signal d'échantillonnage (STROBE_CMD(f1)) produisant un signal d'échantillonnage de sortie (MUX_CTRL(Pf2)) cadencée par la troisième horloge (APPL_CLK),
un circuit de sélection et de maintien de sortie fournissant au circuit d'application (APL) un second signal de repos (ID2) ou le second signal de données (CMD(f1)) selon le signal d'échantillonnage de sortie (MUX_CTRL(Pf2)).
un second circuit de synchronisation (P2P_2) selon l'une quelconque des revendications 1 à 6, recevant le signal d'échantillonnage de sortie (MUX_CTRL(Pf2)) cadencé par la troisième horloge (APPL_CLK), produisant le signal d'accusé réception (ACK_CMD(Pf1)) cadencé par la quatrième horloge (CBUS_CLK).

10. Registre de commande synchronisé selon la revendication 9, dans lequel le piège d'impulsion d'échantillonnage comprend une bascule d'initialisation/remise à zéro dont l'entrée d'initialisation est le signal d'échantillonnage (STR) et le signal de remise à zéro est ledit signal d'accusé réception (ACK_CMD(P(f1)).

11. Registre de commande synchronisé selon la revendication 9 ou 10, dans lequel le circuit d'entrée de sélection et

**EP 1 188 108 B1**

de maintien comprend :

un premier générateur de code de repos produisant le premier signal de repos (ID1),
un multiplexeur (MUX1) couplé au premier signal de repos (ID1), au signal de données d'entrée (SIN), au second signal de données (CMD(f1)), au signal d'échantillonnage (STR), au signal d'accusé réception (ACK_CMD(Pf1)) et au second signal d'échantillonnage (STOBE_CMD(f1)) fournissant un signal de données intermédiaires égal au signal de données d'entrée (SIN) si le signal d'échantillonnage (STR) ou le second signal d'échantillonnage (STOBE_CMD(f1)) est activé, ou bien égal au premier signal de repos (ID1) si le signal d'accusé réception (ACK_CMD(Pf1)) est reçu,
une entrée de bascule de type D, le signal intermédiaire produisant le second signal de données (CMD(f1)).

12. Registre de commande synchronisé selon l'une des revendications 9 à 11, dans lequel le circuit de sortie comprend :

un second générateur de code de repos produisant le second signal de repos (ID2),
un second multiplexeur (MUX2) couplé au second signal de repos (ID2), au second signal de commande (CMD(f1)) et au signal d'échantillonnage de sortie (MUX_CTRL(Pf2)) fournissant un signal de sortie au circuit d'application (APL).

13. Registre de commande synchronisé selon l'une des revendications 9 à 12, dans lequel le second multiplexeur (MUX2) est couplé au circuit d'application (APL) au moyen d'une bascule de type D cadencée par la troisième horloge (APPL_CLK).

14. Circuit de synchronisation bidirectionnel transférant des mots numériques avec un signal d'échantillonnage (STR) à partir d'une interface de microprocesseur (MPR1) fonctionnant avec une première horloge (CLK1) vers un circuit d'application (APL) fonctionnant avec une seconde horloge (CLK2) qui peut être différente de la première horloge (CLK1) en ce qui concerne sa fréquence et/ou sa phase, et des signaux d'alarme en provenance du circuit d'application (APL) vers l'interface du microprocesseur (MPR1) comprenant un registre de commande synchronisé selon l'une des revendications 9 à 13 et un registre d'alarme synchronisé selon la revendication 7 ou 8.

# Figure 1

## Synchronization with Handshake

EP 1 188 108 B1

# Figure 2

## Pulse to Pulse Synchronization Unit

EP 1 188 108 B1

Figure 3

# Timing Diagram of Pulse to Pulse Synchronization Unit

EP 1 188 108 B1

Figure 4

# Two Clock Domains Bidirectional Synchronizer

(cbus_clk (f1) domain)

(appl_clk (f2) domain)

BID-SY

DIR-SY

MPRI

COMMAND_FROM_MPRI[31:0](Pf1)

APL

1d

SIN

Synchronized
Command
Register

SOUT

COMMAND_TO_APL[31:0](Pf2)

3d

2d

SYNC_WR_COMMAND(Pf1)

STR

cbus_clk

CKIN

CKOUT

appl_clk

INV-SY

3i

ALARM_TO_MPRI[31:0](f1)

SOUT

SIN

ALARM_FROM_APL[31:0](f2)

1i

Synchronized
Alarm
Register

2i

SYNC_RD_ALARM(Pf1)

ACK

cbus_clk

CKOUT

CKIN

appl_clk

cbus_clk

appl_clk

Microprocessor Interface

Application Logic

EP 1 188 108 B1

Figure 5

Synchronized Command Register

# Synchronized Alarm Register

**Figure6**

(cbus_clk (f1) domain) ←

(appl_clk (f2) domain) →

INV-SY

← Data direction: APL_to_MPRI

#32

#32

#32

SOUT

#32

#32

Q      D

MUX3

1

ALARM_TO_MPRI[31:0](f1)

DFF7

0

cbus_clk

#32

ALARM_FROM_APL[31:0](f2)

SIN

ACK

2        1

P2P 3

SYNC_RD_ALARM(Pf1)

cbus_clk   CLK2    CLK1   appl_clk

MUX_CTRL[31:0](Pf1)

Alarm Register

Alarm Synchronizer

cbus_clk      CKOUT

CKIN      appl_clk

EP 1 188 108 B1